## Europäisches Patentamt

## European Patent Office

## Office européen des brevets

(11) Numéro de publication: **0 085 006**
**B1**

(12) ## FASCICULE DE BREVET EUROPÉEN

(45) Date de publication du fascicule du brevet:
26.11.86

(51) Int. Cl.⁴: **B 32 B 27/08,** B 60 J 1/18, B 60 J 7/12

(21) Numéro de dépôt: **83400148.9**

(22) Date de dépôt: **21.01.83**

(54) Vitrage flexible en matière plastique en particulier lunette arrière pliable pour un toit de cabriolet repliable.

(30) Priorité: **22.01.82 DE 3201849**

(43) Date de publication de la demande:
**03.08.83 Bulletin 83/31**

(45) Mention de la délivrance du brevet:
**26.11.86 Bulletin 86/48**

(84) Etats contractants désignés:
**AT BE CH DE FR GB IT LI LU NL SE**

(56) Documents cité:
**EP-A-0 054 491**

(73) Titulaire: **SAINT- GOBAIN VITRAGE, Les Miroirs 18, avenue d'Alsace, F-92400 Courbevoie (FR)**

(72) Inventeur: **Brunion, Hans- Georg, Schartstrasse 53, Stolberg (DE)**
Inventeur: **Heuser, Hans, Melatenerstrasse 126, Aachen (DE)**
Inventeur: **Hiemenz, Christian, Mittelstrasse 30, Herzogenrath (DE)**
Inventeur: **Rädisch, Helmer, Nizzaallee 36, Aachen (DE)**

(74) Mandataire: **Muller, René, SAINT- GOBAIN RECHERCHE 39, quai Lucien Lefranc, F-93304 Aubervilliers (FR)**

LIBER, STOCKHOLM 1986

EP 0 085 006 B1

## Description

La présente invention concerne un vitrage flexible en matière plastique en particulier destiné à être incorporé en tant que lunette arrière pliable flexible dans le toit repliable d'un cabriolet.

De tels vitrages doivent satisfaire à diverses exigences pour partie contradictoires. D'une part, ils doivent présenter de bonnes propriétés optiques pour assurer une vue sans distorsion et être suffisamment rigides pour se placer autant que possible sans former d'ondulations, à l'état tendu, c'est-à-dire lorsque le toit est fermé. D'autre part, an tel vitrage doit être suffisamment flexible pour, étant donné qu'il est intégré au toit d'un cabriolet, pouvoir suivre l'opération de repliage sans cependant former des faux plis Le vitrage en matière plastique doit en outre présenter une bonne résistance aux rayures et à l'abrasion pour que la vue ne soit pas gênée par une surface rayée. Ces propriétés doivent enfin être maintenues durablement dans des conditions de températures très variables, c'est à dire dans un domaine de températures allant de + 80°C à - 40°C.

On ne connaît jusqu'à présent aucun vitrage qui présente simultanément et de manière optimale toutes ces propriétés requises. En particulier, lorsque les propriétés optiques sont satisfaisantes, la flexibilité laisse à désirer et, en outre, pour toutes les lunettes arrières en matière plastique connuess, la résistance aux rayures superficielles est relativement faible de sorte qu'en général après un usage prolongé, les surfaces sont altérées dans une mesure plus ou moins prononcée aux détriment de la transparence. Il en est en particulier ainsi pour les vitrages en chlorure de polyvinyle souple d'une épaisseur d'environ 1,5 mm utilisés jusqu'à présent dans la pratique.

La présente invention a pour but de procurer en vue de l'utilisation en tant que lunette arrière dans un toit de cabriolet repliable ainsi que pour d'autres applications semblables un vitrage en matière plastique qui présente à la fois une bonne aptitude à la déformation élastique et une bonne résistance aux rayures et abrasions et qui conserve ses propriétés pendant une durée prolongée dans un domaine de températures étendu allant d'environ - 40 à + 80°C.

Le vitrage conforme à l'invention est constituée d'une feuille de matière plastique à plusieurs couches et notamment une couche d'âme mince d'une épaisseur maximum d'environ 1 mm résistant aux chocs et aux déchirures en polycarbonate ou en polyuréthane-polyurée et des couches de revêtement d'une épaisseur d'environ 0,2 à 0,5 mm en un polyuréthane très élastique présentant des propriétés d'autocicatrisation.

Les feuilles à plusieurs couches présentant ces propriétés offrent une série d'avantages qui les rendent particulièrement adéquates en tant que lunettes arrière pliables et pour d'autres applications semblables. Parmi ces avantages il convient de citer en particulier la grande flexibilité, la résistance élevée aux rayures des couches de revêtement autocicatrisables et leur insensibilité aux variations de température, la bonne aptitude au traitement de la feuille composite et le bon canportement à l'usage même pendant de longues durées. Il s'est avéré en particulier que les vitrages conformes à l'invention peuvent être facilement cousus à un tissu par exemple à la capote constituant le toit d'un cabriolet. La couche d'âme assure pour sa part la résistance requise aux déchirures tandis qu'en particulier les couches de revêtement élastiques assurent que les trous de piquage des aiguilles à coudre se referment ensuite pour empêcher ainsi le passage d'humidité et d'eau. La couche de revêtement sur le côté extérieur du vitrage monté en place protège ce dernier contre les rayures provoquées par des effets extérieurs tels que les opérations de nettoyage, l'élimination de couches de glace etc., tandis que la couche de revêtement autocicatrisable sur le côté intérieur protège le vitrage contre des détériorations par les sollicitations abrasives auxquelles ces surfaces sont exposées à l'état plié lorsque la surface entre pour partie en contact avec elle-même et est soumise à un frottement sous l'effet des secousses dues au roulage. En outre, on a observé que les couches de rêvetement très élastiques extrêmement souples facilitent l'operation de repliage elle-même.

Les vitrages conformes à l'invention conviennent non seulement comme lunette arrière pour des toits de cabriolets repliables mais de la même manière pour toutes les applications semblables par exemple des fenêtres dans des bâhes de camion, des fenêtres dans des tentes, des fenêtres dans les voiles de planches à voile, etc.

Selon une première forme de réalisation, la couche d'âme est constituée d'une feuille d'une épaisseur de 0,3 à 0, 8 mm en polycarbonate et les couches de revêtement en polyuréthane très élastique ayant des propriétés d'autocicatrisation ont chacune une épaisseur d'environ 0,4 mm.

Suivant une autre forme de réalisation, la couche d'âme est formée d'une feuille relievement souple comparée au polycarbonate, d'une épaisseur de 0,2 à environ 1 mm, en une polyuréthane-polyurée à structure moléculaire principalement linéaire et comportant des segments uréthane et des segments urée à liaison aliphatique ou cycloaliphatique. De telles polyuréthane-polyurées sont obtenues par réaction d'un prépolymère à teneur en radicaux isocyanate libres, avec des diamines primaires aliphatiques ou cycloaliphatiques d'un poids moléculaire moyen de 60 à 340. Le prépolymère à teneur en radicaux isocyanates libres est formé à partir d'un polyesterdiol ou d'un polyétherdiol, chacun d'un poids moléculaire moyen de 500 à 4000 ou à partir d'un mélange, de tels polyesteidiols et polyétherdiols ainsi qu'à partir de diols aliphatiques à, chaîne courte ayant des poids moléculaires de 62 à 250 et d'on diisocyanate aliphatique ou cycloaliphatique mis en oeuvre en excès par rapport aux radicaux hydroxyle libres.

Les couches de revêtement en polyuréthane très élastique présentent des propiétés d'autocicatrisation peuvent être préparés par divers procédés classiques. Elles peuvent être préparées in situ par exemple à l'aide de procédes connus de pulvérisation et d'immersion. On peut encore former des feuilles préfabriquées par exemple par coulée d'une composition sur un support. On peut utiliser des couches de polyurétahne thermodurcissable formée à partir d'un polyol et d'un composant isocyanate, le composant polyol étant pris en excès, par exemple les polyuréthanes décrits dans les publications de brevets français 2 251 608 et 2 398 606.

Pour améliorer la liaison entre la couche d'âme et les couches de revêtement en polyuréthane très élastique, ou pour obtenir une liaison durable, on peut munir la couche d'âme ou les couches de rêvetement d'une couche adhésive notamment à base d'un polyuréthane thermoplastique.

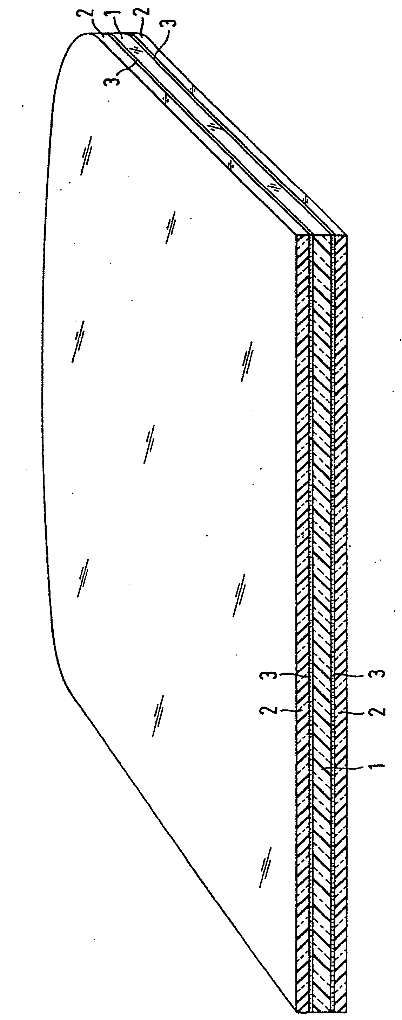

Des exemples de réalisation préférés d'une feuille composite conforme à l'invention sont décrits ci-après en détail avec référence à la figure.

### Exemple 1

La couche d'âme 1 est constituée d'une feuille claire et transparente d'une épaisseur de 0,5 mm en polycarbonate par exemple une feuille disponible dans le commerce sous la marque LEXAN de la société General Electric. Sur cette feuille de polycarbonate on applique des deux côtés une couche de revêtement 2 d'une épaisseur de 0,4 mm sous la forme d'une feuille qui est unie chaque fois par l'intermédiaire d'une couche adhésive 3 d'une épaisseur de 0,02 mm de façon durable à la couche d'âme 1.

On produit la feuille servant de couche de revêtement 2 de manière connue en versant, en une couche d'une épaisseur de 0,4 mm un mélange réactionnel exempt de solvant dont la composition est décrite par exemple dans la publication de brevet français 2 251 608, au moyen d'une tête de coulée à racle sur un support de coulée, par exemple une plaque de verre, où on la laisse polymériser éventuellement avec apport de chaleur. Sur la couche polymérisée on verse alors également au moyen d'une tête de coulée à racle, une solution adhésive d'un polyuréthane thermoplastique apte à former une couche adhésive. Après évaporation du solvant et formation de la pellicule adhésive, on retire la feuille de revêtement à deux couches ainsi formée du support de coulée. La production d'une telle feuille de revêtement revêtue d'une couche adhésive est décrite par exemple en détail dans la publication de brevet français 2 398 606.

Le contre collage de la feuille de revêtement à deux couches obtenue précédemment est réalisé avec apport de chaleur et de pression de manière classique par exemple à l'aide d'une calandreuse avec chauffage simultané ou ultérieur du stratifié à une température d'environ 120° C.

Lorsqu'on désire obtenir un vitrage teinté, on peut immerger la feuille composite finie dans une solution colorante de telle sorte que les couches de revêtement acquièrent la coloration souhaitée. Un tel procédé pour colorer les couches de revêtement est décrit dans la publication de brevet français 2 467 906.

### Exemple 2

On utilise comme couche d'âme une feuille d'une epaisseur de 0,6 mm en polyuréthane-polyurée thermoplastique. La polyuréthanepolyurée est obtenue de la menière suivante:

après séchage sous vide sous 0,02 bar à une température de 110° C, on couvre d'azote gazeux 1000 g d'un polyester linéaire obtenu par réaction de l'acide adipique avec le tétraméthylèneglycol et présentant un poids moléculaire moyen d'environ 2250 et une teneur en radicaux hydroxyle libres d'environ 1,5 % et on refroidit le produit sous cette atmosphére de gaz protecteur jusqu'à environ 80° C. On ajoute alors à cette masse fondue 496 g d'isophoronediisocyanate ayant une teneur en radicaux isocyanate libres d'environ 37,5 % et on convertit le mélange à une température d'environ 90° C en un prépolymère contenant des radicaux isocyanate. Après environ 3 heures, on ajoute encore en vue d'un préallongement de chaîne 121 g de tétraméthylèneglycol en portant la température pendant 1 heure à 120° C. On ajoute alors 1,5 litre de xylène à la masse fondue de prépolymère ainsi obtenue. Après refroidissement jusqu'à environ 30° C, on ajoute 73 g d'isophorcnediamine à la solution en vue d'achever l'allongement de la chaîne. On verse la solution limpide très visqueuse formée, sur des plaques de verre et on laisse ensuite évaporer le solvant ce qui donne une pellicule satisfaisante du point de vue optique.

On prépare ensuite un mélange réactionnel propre à être coulé de la manière suivante:

on mélange de manière homogène dans un récipient maintenu sous dépression 1000 g d'un polyéther d'un poids moléculaire d'environ 450 et d'une teneur en radicaux hydroxyle libres de 10,5 à 12 % en poids obtenu par réaction d'oxyde de propylène avec un triol, comme la glycérine ou le triméthylolpropone,

0,5 g de dilaurate de dibutylétain,

1000 g d'un biuret ou d'un triisocyanurate de 1,6-hexaméthylènediisocyanate ayant une teneur en radicaux isocyanate libres de 21 à 24 % en poids, auxquels on peut encore ajouter pour les raisons indiquées par la suite

30 g de sébaçate de bis (1,2,2,6,6-pentaméthyl-4-piperidyle), et

20 g de 2-(2-hydroxy-3,5-di-t-amylphényl)-2H-benzotriazol. On verse ce mélange de réaction propre à être coulé à l'aide d'une tête de coulée à racle successivement sur les deux faces de la couche d'âme en une épaisseur de 0,5 mm. On laisse polymériser les couches coulées sous l'effet de la chaleur. En variante, on peut aussi préparer à partir de ce mélange réactionnel, par le procédé de coulée, des feuilles d'une épaisseur d'environ 0,5 mm et contre-coller ces feuilles directement sur les deux surfaces de la couche d'âme avec apport de chaleur et de pression.

Etant donné que les couches autocicatrisables sont exposées directement au rayonnement solaire, on ajoute avantageusement au mélange réactionnel un stabilisant à la lumière et un agent absorbant les rayons ultraviolets. Les composés chimiques de la classe des amines à empêchement stérique tels que le sébaçate de bis (2,2,6,6-tétramethyl-4-pipéridyle) ou le sébaçate de bis (1,2,2,6,6-pentaméthyl-4-pipéridyle) se sont revélés particuliérement efficaces comme stabilisants à la lumière. Ce stabilisant à la lumière est ajouté au mélange réactionnel propre à être coulé, en une quantité pouvant atteindre 9 % du poids de ce dernier. Des résultats optimaux en ce qui concerne la stabilité à l'égard des rayons ultraviolets sont obtenus pour une addition d'environ 5 %, mais des additions plus faibles de l'ordre de 1 % peuvent aussi procurer des résultats satisfaisants. En plus du stabilisant à la lumière, il s'est avéré utile d'ajouter un agent absorbant les rayons ultraviolets et ce, en quantité de 0,1 à 5 % en poids. On obtient un effet satisfaisant pour l'absorption des rayons ultraviolets par exemple au moyen d'une addition d'environ 1 % en poids sur la base du mélange réactionnel propre à être coulé de 2-(2-hydroxy-5-méthylphényl)-2H-benzotriazol.

## Exemple 3

Pour fabriquer une lunette arrière pliable à chauffage électrique on opère de la manière suivante: on produit une feuille d'une épaisseur de 0,6 mm en polyuréthane-polyurée thermoplastique comme décrit à l'exemple 2. Dans la surface de cette couche d'âme on noie des conducteurs électriques chauffants. On noie les fils de chauffage au moyen d'un dispositif tel que décrit, par exemple dans la publication de brevet allemand DE-AS 1 679 930. Au lieu de fils chauffants, on peut aussi appliquer sur la surface de la couche d'âme des conducteurs chauffants faits d'une pâte conductrice apte à l'impression, par un procédé d'impression connu, par exemple par sérigraphie. Des pâtes conductrices aptes à l'impression convenant à cette fin sont bien connues et disponibles dans le commerce. Les fils ou conducteurs chauffants sont pourvus d'éléments de connexion ou de fils de connexion électriques qui relient la résistance chauffante à la source de courant. Lorsque la résistance chauffante est disposée sur la couche d'âme, les deux faces de la couche d'âme sont revêtues d'une couche de polyuréthane très élastique de 0,5 mm d'épaisieur par le prodédé décrit dans l'exemple 2.

## Revendications

1. Vitrage flexible en matière plastique destiné notamment à être incorporé en tant que lunette arrière flexible dans le toit repliable d'un cabriolet, comprenant une feuille à plusieurs couches caractérisé en ce qu'il comprend dont une couche d'âme mince (1) d'une épaisseur maximum d'environ 1 mm résistant aux chocs et aux déchirures en polycarbo, nate ou en polyuréthane-polyurée et des couches de revêtement (2) d'une épaisseur de 0,2 à 0,5 mm en un polyréthane très élastique présentant des propriétés d'autocicatrisation, situées de part et d'autre de la couche d'âme mince.

2. Vitrage flexible selon la revendication 1, caractérisé en ce que la couche d'âme (1) est constituée d'une feuille d'une épaisseur de 0,3 à 0,8 mm en polycarbonate.

3. Vitrage flexible selon une des revendications 1 et 2, caractérisé en ce que la couche d'âme (1) en polycarbonate a une épaisseur d'environ 0,5 mm et les couches de revêtement (2) en polyuréthane très élastique prèsentant des propriétés d'autocicatrisation ont chacune une épaisseur d'environ 0,4 mm.

4. Vitrage flexible selon la revendication 1, caractérisé en ce que la couche d'âme (1) est constituée d'une feuille d'une épaisseur de 0,2 à 1,0 mm faite d'une polyuréthane-polyurée présentant une structure moléculaire principalement linéaire et comportant des segments d'uréthane et d'urée à liaison aliphatique ou cycloaliphatique.

5. Vitrage flexible selon la revendication 4, caractérisé en mère contenant des radicaux isocyanates libres avec des diamines primaires aliphatiques ou cycloaliphatiques dont le poids moléculaire moyen est de 60 à 340, le prépolymère étant formé à partir d'un polyesterdiol ou d'un polyétherdiol ayant chacun un poids moléculaire moyen de 500 à 4000 ou à partir d'un mélange de tels polyesterdiols et polyétherdiols ainsi que de diols aliphatiques en chaîne courte dont le poids moléculaire moyen est de 62 à 250 et d'un diisocyanate aliphatique ou cycloaliphatique mis en oeuvre en excès par rapport aux radicaux hydroxyle libres.

6. Vitrage flexible selon une des revendications 1 à 3, caractérisé en ce que les couches de revêtement (2) en polyuréthane très élastique présentent des propriétés d'autocicatrisation sont unies à la couche d'âme en polycarbonate à l'aide d'une couche adhésive (3) notamment en polyuréthane thermoplastique.

7. Vitrage flexible selon une des revendications 1 à 6, caractérisé en ce que les couches de revêtement très élastiques (2) sont pourvues d'un stabilisant à la lumière et d'un agent absorbant les rayons ultraviolets.

8. Vitrage flexible selon une des revendications 1 à 7, caractérisé en ce que des conducteurs électrigues chauffants sont disposés dans l'une des couches de la feuille composée.

9. Vitrage flexible selon une des revendications 1 à 8, caractérisé en ce qu'une ou plusieurs des couches de la feuille composée sont teintées.


## Patentansprüche

1. Flexible Sichtscheibe aus Kunststoff, insbesondere für den Einsatz als flexible Heckscheibe in dem faltbaren Verdeck eines Kabrioletts, aus einer mehrschichtigen Folie, dadurch gekennzeichnet, daß sie aus einer dünnen, höchstens etwa 1 mm dicken schlag- und reißfesten Kernschicht (1) aus Polycarbonat oder aus Polyurethan-Polyharnstoff und Deckschichten (2) von 0,2 bis 0,5 mm Dicke aus einem hochelastischen Polyurethan mit Selbstheileigenschaften besteht, die auf beiden Seiten der dünnen Kernschicht angeordnet sind.

2. Flexible Sichtscheibe nach Anspruch 1, dadurch gekennzeichnet, daß die dünne Kernschicht (1) aus einer 0,3 bis 0,8 mm dicken Folie aus Polycarbonat besteht.

3. Flexible Sichtscheibe nach einem der Ansprüche 1 und 2, dadurch gekennzeichnet, daß die Kernschicht (1) aus Polycarbonat eine Dicke von ungefähr 0,5 mm, und die Deckschichten (2) aus hochelastischem Polyurethan mit Selbstheileigenschaften jeweils eine Dicke von etwa 0,4 mm aufweisen.

4. Flexible Sichtscheibe nach Anspruch 1, dadurch gekennzeichnet, daß die Kernschicht (1) aus einer 0,2 bis 1,0 mm dicken Folie aus einem Polyurethan-Polyharnstoff besteht, der im wesentlichen eine lineare Molekülstruktur und aliphatisch oder cycloaliphatisch gebundene Urethan- und Harnstoffsegmente aufweist.

5. Flexible Sichtscheibe nach Anspruch 4, dadurch gekennzeichnet, daß der Polyurethan-Polyharnstoff durch Reaktion eines freie Isocyanatgruppen enthaltenden Prepolymeren mit primären aliphathischen oder cycloaliphatischen Diaminen mit einem mittleren Molekulargewicht von 60 bis 340 erhalten wird, wobei das Prepolymer aus einem Polyesterdiol oder einem Polyätherdiol mit jeweils einem mittleren Molekulargewicht von 500 bis 4000, oder aus einer Mischung solcher Polyesterdiole und Polyätherdiole und kurzkettiger aliphatischer Oiole mit einem mittleren Molekulargewicht von 62 bis 250 und einem aliphatischen oder cycloaliphatischen Diisocyanat hergestellt wurde, das in Bezug auf die freien Hydroxylgruppen im Überschuß vorhanden ist.

6. Flexible Sichtscheibe nach einem der Ansprüche 1 bis 3, dadurch gekennzeichnet, daß die Deckschichten (2) aus hochelastischem Polyurethan mit Selbstheileigenschaften mit der Kernschicht aus Polycarbonat mit Hilfe einer Klebeschicht (3) insbesondere aus thermoplastischem Polyurethan verbunden sind.

7. Flexible Sichtscheibe nach einem der Ansprüche 1 bis 6, dadurch gekennzeichnet, daß die hochelastischen Deckschichten (2) mit einem Stabilisator für das Licht und einem UV-Strahlen absorbierenden Mittel versehen sind.

8. Flexible Sichtscheibe nach einem der Ansprüche 1 bis 7, dadurch gekennzeichnet, daß in einer der Schichten der Verbundfolie elektrische Heizleiter angeordnet sind.

9. Flexible Sichtscheibe nach einem der Ansprüche 1 bis 8, dadurch gekennzeichnet, daß eine oder mehrere der Schichten der Verbundfolie gefärbt sind.


## Claims

1. A flexible window pane of plastics material suitable for use as a flexible rear window in the foldable roof of a convertible motor car, comprising a sheet having a plurality of layers, characterised in that it comprises a thin core layer (1) having a maximum thickness of about 1 mm and resistant to impact and tearing of polycarbonate or polyurethane-polyurea and coating layers (2) having a thickness from 0.2 to 0.5 mm of a very elastic polyurethane having self-healing properties situated on both sides of the thin core layer.

2. A flexible pane according to claim 1, characterised in that the core layer (1) is formed of a polycarbonate sheet having a thickness from 0.3 to 0.8 mm.

3. A flexible pane according to claim 1 or 2, characterised in that the core layer (1) of polycarbonate has a thickness of abouf 0.5 mm and the coating layers (2) of very elastic polyurethane having self-healing properties each have a thickness of about 0.4 mm.

4. A flexible pane according to claim 1, characterised in that the core layer (1) is formed of a sheet of thickness from 0.2 to 1.0 mm made of a polyurethanepolyurea having a mainly linear molecular structure and comprising urethane and urea segments having aliphatic or cycloaliphatic links.

5. A flexible pane according to claim 4, characterised in that the polyurethane-polyurea is obtained by reaction of a prepolymer containing free isocyanate radicals with primary aliphatic or cycloaliphatic diamines of which the average molecular weight is from 60 to 340, the prepolymer being formed from a polyesterdiol or a polyetherdiol each having an average molecular weight from 500 to 4000 or from a mixture of such polyesterdiols and polyetherdiols and short chain aliphatic diols of which the average molecular weight is from 62 to 250, and an aliphatic or cycloaliphatic diisocyanate used in an excess relative to the free hydroxyl radicals.

6. A flexible pane according to one of claims 1 to 3, characterised in that the coating layers (2) of very elastic polyurethane having self-healing properties are joined to the polycarbonate core layer by means of an adhesive layer (3), notably of thermoplastic polyurethane.

7. A flexible pane according to one of claims 1 to 6, characterised in that the very elastic coating layers are provided with a stabiliser to light and an agent absorbing ultraviolet rays.

8. A flexible pane according to one of claims 1 to 7, characterised in that heating electric conductors are arranged in one of the layers of the composite sheet.

9. A flexible pane according to one of claims 1 to 8, characterised in that one or more layers of the composite sheet are tinted.